# EUROPEAN PATENT SPECIFICATION

(11) **EP 1 949 483 B1**
(45) Date of publication and mention of the grant of the patent: **22.04.2009**
(21) Application number: 06779547.6
(22) Date of filing: 26.09.2006
(51) Int. Cl.: H01M 8/10, H01M 8/24, H01M 8/02

(54) **FUEL CELL ASSEMBLY**
BRENNSTOFFZELLEN-BAUGRUPPE
ASSEMBLAGE DE PILES À COMBUSTIBLE

(30) Priority: 28.09.2005 GB 0519807
(43) Date of publication of application: 30.07.2008
(73) Proprietor: THE WELDING INSTITUTE, Great Abington, Cambridge CB21 6AL (GB)
(72) Inventor: BURLING, Paul, Maurice, Great Abington, Cambridge CB21 6AL (GB); GUNNER, Alec, Gordon, Great Abington, Cambridge CB21 6AL (GB)
(74) Representative: Skone James, Robert Edmund
(86) International application number: PCT/GB2006/003567
(87) International publication number: WO 2007/036705

(56) References cited:
- EP-A- 1 391 956
- WO-A-20/05020356
- US-A1- 2003 203 271
- US-A1- 2004 146 772
- US-A1- 2005 084 733

## Description

This invention relates to a fuel cell assembly in which a fuel cell is incorporated in a composite laminate structure.

Composites are gaining popularity in a variety of industries for a number of reasons such as good mechanical strength at lower densities in comparison to classic materials, electrical insulation properties, resistance to corrosion and ease of use. In most applications they provide passive structural volume to the product, and separate functional elements, such as electronic systems, are mounted thereupon.

Composite materials are engineering materials made from two or more components that work together to exceed the performance of one. One component is often a strong fibre such as glass, quartz, Kevlar ® or carbon fibre that gives the composite its tensile strength, while another component (called a matrix) is often a resin such as polyester or epoxy that binds the fibres together and generally renders the material stiff and rigid. Some composites use an aggregate instead of, or in addition to, fibres.

Composite laminate structures are a specific form of composite consisting of discrete materials intimately bonded together to form a unitary body. Typically, this has the form of a board or panel (which may go on to be incorporated in some other product). Such structures are generally made up of two outer skins with a core material extending between them. In some cases, multiple core materials may be used and additional skin materials may be incorporated between each. In other cases, the outer skin may be provided by the core material itself (e.g. where the core material is sealed along its face, for instance by heat treatment).

Appropriate skin materials include composite laminates and metal sheets (e.g. aluminium, stainless steel, mild steel); indeed aluminium sheets can be laminated with composite prepregs to form a structure similar to plywood. The choice of skin will depend on the end-use application.

Known core materials include honeycomb, foam, wood, truss core, laminate core, extrusions, and 3D fabrics with selection depending on the end-use application with respect to such factors as strength, stiffness, flammability, formability and ease of machining. Honeycomb, foam and some 3D fabrics can be described generally as "cellular" materials.

"Honeycomb" is the generic name for a range of products incorporating a honeycomb, or hexagonal, form. Shapes such as round, elliptical and square have been explored but a hexagonal shape is preferred. Honeycomb core can be created from aramid paper (such as Nomex® or Tyvec®, both by DuPont), aluminium foil, craft paper, thin glass laminates and thermoplastic sheets. The material can either be corrugated or bonded at the cell nodes, expanded and heat set to form a hexagonal structure.

Foam core materials are based on a cellular structure with no apparent cell order or periodicity. Three distinct types exist; open cell, closed cell and reinforced foam. In open cell foams, the voids are joined together allowing passage of gases etc. through the foam. In closed cell foams, the voids are separate, divided by walls of material. Reinforced foams are typically a combination of two or more materials to form foam wherein one of the materials provides reinforcement. For example glass and resin may be combined to form a reinforced foam, commonly called a synthetic foam, wherein the resin provides reinforcement. Other reinforced foams exist that incorporate a metal reinforcement, such as aluminium foam that is made up from aluminium and ceramic. In general the closed cell structures provide the best mechanical performance and the open cell structures give the best sound reduction/damping properties. Foams can be made from a wide variety of materials including urethanes, phenolics and thermoplastics. Selection will depend on the specific application requirements.

3D fabrics, such as open-weave materials, have enabled engineers and designers to incorporate much more flexibility into products without compromising on functionality. Such cores can provide solutions to specific design problems but are seldom able to provide a better general solution than the more common core materials of honeycomb, foam and wood.

Fuel cells are electrochemical devices that convert chemical energy to electrical energy without combustion. Unlike a normal battery, a fuel cell can continuously produce electricity for as long as fuel is supplied to it. Proton-exchange membrane fuel cells ("PEMFCs"), also known as polymer electrolyte membrane fuel cells, are low temperature, typically compact fuel cells that have been developed with the aim of use for transport applications as well as for portable applications such as mobile phones.

A conventional PEMFC comprises an ion exchange membrane (a thin polymer membrane, such as Nafion^{®} by DuPont) sandwiched between but in contact with an anode and a cathode. The two electrodes are connected to an electric circuit. Fuel such as hydrogen gas is introduced at the anode, where it dissociates according to the following half-cell reaction to form protons that pass through the electrolytic membrane:

H₂ → 2H⁺ + 2e-

An oxidant, such as oxygen or air, is introduced simultaneously at the cathode, where the complementary half-cell reaction takes place:

½ O₂ + 2H⁺ + 2e⁻ → H₂O

An electric current is thereby established between the anode and the cathode, and when using pure hydrogen the only by-product of the cell is water.

The anode and cathode are typically carbon-supported, platinum-based catalysts. These may be printed on porous carbon fibre paper which forms a gas diffusion layer (GDL). The anode-membrane-cathode assembly, commonly termed the "membrane electrode assembly" (MEA), is typically interposed between electrically conductive graphite plates. These "separator" or "field flow" plates collect current, facilitate access of the fuel and oxidant to the anode and cathode surfaces, respectively, and provide for the removal of water formed during the operation of the cell.

For example, US-A-6,878,477 discusses the distribution of flow channels in the anode and cathode flow field plates. US-A-6,913,846 discloses a fuel cell system comprising a flow field plate which is adapted to provide means for carrying out a preparatory reaction step prior to the fuel reaching the anode. In both cases, as is typical in conventional fuel cell arrangements, the plates are provided with channels in their surface to distribute fluid across the electrode surface. Such field flow plates are often expensive to manufacture, typically requiring machining of complex gas flow paths in solid graphite plates. WO-A-03/073548 proposes the use of a porous gas distribution material having channels defined therein for dispersement of fluid across the electrode. However, the porous layer requires a complex framework to support it and supply fluid. As such, little benefit is achieved. WO-A-2002/027838 proposes the use of a thin metal foam layer mounted on foil to disperse the fluid over the electrode. However this too depends on a complex framework structure for providing support and supply of fluid.

In some examples, a plurality of membrane electrode assemblies (MEAs) are configured together to form a stack wherein like electrodes of neighbouring MEAs face each other. The supply and discharge manifolds of fuel and oxidant gases respectively can then be coupled across the stack at alternating surfaces between MEAs. This series of fuel cells, the "fuel cell stack", is normally enclosed in a housing. The stack, housing, and associated hardware make up a fuel cell unit. When considering the introduction of fuel cells into an industrial application, the fuel cell is conventionally viewed as a stand-alone unit that is incorporated into the structure in much the same way as a battery. To provide the power output required, a prescribed number of fuel cells are stacked, housed into a unit and then incorporated into the assembled structure.

US-A-6,811,918, for example, discloses a PEMFC having polymer composite bi-polar plates, which are electrically conductive current collectors separating the plurality of MEAs stacked together in electrical series. Fluid is dispersed across each electrode by serpentine paths in the plate surface before passing through a graphite paper diffusion layer. US-A-6,838,204 aims to limit the problems associated with stacking a plurality of fragile PEMFCs by way of a receptacle shaped to receive PEMFCs in a staggered or spiral configuration. Such complex arrangements are expensive and do not lend themselves to practical applications. Indeed, the vast majority of PEMFCs are prototypes and demonstrations units. To move PEMFCs into large scale commercial use, even with the incorporation of the various material improvements being progressed will require design changes for manufacturing. Also PEMFCs are relatively fragile and may not be self-supporting thus support of the PEMFCs when assembling the fuel cell unit is especially important. In addition, as a result of the frames and complex field flow plates required to distribute the fluids over the MEAs, the fuel cell assembly is heavy and cumbersome.

In contrast to PEMFCs, solid oxide fuel cells (SOFCs) operate at high temperatures, around 1000°C, to maximise ion conductivity of the membrane, which is formed of an oxygen conductor such as yttria doped zirconia. The operating temperature requires that a SOFC is constructed utilising mainly ceramic materials forming a rigid structure. SOFC cell units are arranged in parallel with each other and are rigidly and closely fixed to each other to form a power generation chamber, whereby oxidizing gas and a fuel gas are supplied from one side of the power generation chamber and burnt exhaust gas is discharged from the other side thereof. SOFCs are generally aimed at the power generation sector.

For portable applications a variant of the PEMFC, the direct methanol fuel cell (DMFC), has been developed. The DMFC operates on methanol fed directly to the anode of the device. A further adaptation is also being developed in which a fluid-permeable electrolyte membrane is employed. A mixture of air and fuel is passed through the cell instead of across it. Each electrode is designed to selectively promote reaction of either the fuel or the oxidant.

Like the PEMFCs, practical implementations of the SOFCs and DMFCs still require a suitable fluid flow mechanism to deliver fuel and air to the fuel cell in an efficient manner.

In accordance with a first aspect of the present invention, a fuel cell assembly comprises a fuel cell incorporated in a composite laminate structure, the composite laminate structure comprising a core material within which the fuel cell is embedded, the fuel cell comprising an electrolytic membrane having first and second faces, and first and second electrodes disposed adjacent to the respective faces of the electrolytic membrane, the first and second electrodes being connectable to an electric circuit, wherein the core material provides support to the fuel cell embedded therein and fluid communication through the core material, to enable the passage of one or more fluids to the first and second electrodes, characterised in that the core material comprises a cellular material having cells defined by cell walls, at least some of the cells being interconnected to allow the passage of fluid between cells, through selected cell walls.

By incorporating a fuel cell into a composite structure in this way, several advantages are gained. First, an otherwise passive structural component, the composite laminate structure, becomes functional itself through use of the core material as a fluid transfer mechanism (gas or liquid) for the embedded fuel cell. The overall volume taken up by a product requiring a fuel cell can therefore be reduced by housing the fuel cell in the product structure. This will not only lead to more compact products but also makes the choice of a fuel cell, over alternative power supplies, more attractive since they can more readily find application in confined spaces. The ability to select where a fuel cell is located in a structural component also makes it possible to eliminate some wiring by positioning the fuel cell close to the component(s) to which it supplies power. This provides weight savings to the overall structure.

The incorporation of a fuel cell inside a composite structure also provides support and housing for the fuel cell components in a manner which does away with the requirement for complex and expensive housings and fluid flow plates. Fluid transfer to the electrodes can readily be achieved and controlled through appropriate configuration of the core material. The inherent strength of the structure provides protection for the fuel cell components both during manufacture and in use. Further, the composite structure can be used to store gas or liquid.

As will be described, the core material can transport fluid(s) to the electrodes in a number of alternative ways. In a preferred embodiment, the core material is adapted to enable the passage of a first fluid to the first electrode and a second fluid to the second electrode, whilst maintaining separation between the first and second fluids. This arrangement is particularly suitable for fuel cells which require different fluids to arrive at each electrode. For example, most PEMFCs require fuel to arrive at the anode and air or oxygen at the cathode. It is therefore preferable that the first fluid comprises a fuel fluid and the second fluid comprises a reactant fluid. It is envisaged that alternative chemistries to those described above could be utilised: for example, the reactant fluid could be a reducing agent. However, it is preferable that the reactant fluid is an oxidant.

Depending on the type of core material used, a single core material may be employed which is adapted to transport the two fluids separately to the fuel cell. For example, a foam material could be employed in which the interconnection of the pores is such that the first fluid is confined to one region of the material and the second volume to another. Similarly, the core material may have first and second channels defined therein for passage of the first and second fluids, respectively, to the first and second electrodes.

In a preferred embodiment, however, the core material comprises first and second core materials, defining an interface therebetween, the first and second core materials being separated along at least a portion of the interface by an interlayer which is substantially impermeable to fluid. This provides a particularly convenient way of separating the two fluids, since one can be confined to each core material by the interlayer. The core materials may themselves place additional restrictions on the flow of fluid, for example by having channels defined therein, but could comprise materials through which fluid is free to travel, e.g. an open cell foam.

Conveniently, the electrolytic membrane is disposed at the interface between the first and second core materials, at least a portion of the membrane being located in a region of the interface to which the interlayer does not extend, such that the first face of the electrolytic membrane abuts the first core material and the second face abuts the second core material. In this configuration, the membrane itself locally separates the two core materials and is well positioned to receive fluid from each. Further, the membrane can be supported by the interface, and/or by the interlayer. It should be noted that the membrane is not necessarily disposed in the plane of the interface or interlayer, but could be displaced to either side of the interface, provided the first and second faces abut the first and second core materials respectively.

Preferably, the electrolytic membrane is disposed substantially parallel to the interface, the first and second faces being arranged on opposing sides of the membrane. However, the membrane could be arranged at an angle to the interface, for example perpendicularly, if so desired. For example, the two electrodes could be disposed on the same side of the membrane, in which case the first and second faces would be defined by the same face of the membrane.

Advantageously, the interlayer is provided with a through-thickness aperture within which the electrolytic membrane is disposed. This provides support for the membrane at all of its edges. Alternatively, the membrane could be disposed at one end of the interlayer, or beside it. Preferably, the electrolytic membrane is incorporated in the interlayer. This aids manufacture since the fuel cell MEA can be constructed with the interlayer acting as support. For example, the membrane and optionally the electrodes could be co-cured, bonded or welded into a laminate interlayer. Wiring or conductive tracks could also be provided on the interlayer to connect the electrodes to the electric circuit.

In another embodiment, it is advantageous to select an electrolytic membrane which is permeable to fluid, allowing fluid arriving at the membrane at its first face to cross to its second face and vice versa. Thus fluid need only be directly transported to one electrode by the core material; transport to the second is completed by the membrane itself. The core material is therefore advantageously adapted to enable the passage of fluid to the second electrode via the electrolytic membrane. For example, the core material may define a single channel. Preferably, however, the core material is adapted to provide a fluid inlet path to the first electrode and, via the electrolytic membrane, to the second electrode, and a fluid outlet path from the second electrode, whilst maintaining separation between the inlet and outlet paths. This directs fluid flow through the membrane in a single direction. In a preferred embodiment, this is achieved by a core material which comprises first and second core materials, defining an interface therebetween, the first and second core materials being separated along at least a portion of the interface by an interlayer which is substantially impermeable to fluid, wherein the first core material provides the fluid inlet path and the second core material provides the fluid outlet path.

These configurations are particularly suited to operation based on a single input fluid. Preferably therefore the fluid comprises a mixture of first and second fluids. Conveniently, the first fluid comprises a fuel fluid and the second fluid comprises a reactant fluid. Typically, the reactant fluid is an oxidant.

In either of the two implementations described above, it is preferable that the first electrode is selectively responsive to the first fluid and the second electrode is selectively responsive to the second fluid. In the case of a mixed fluid, this enables a single constituent to react at each of the electrodes, resulting in a larger and more stable electric current. Where the fluids are separate, selective design of the two electrodes can be used to optimise their performance.

The core material can transport fluid(s) directly to the relevant electrode. However, in certain embodiments it is preferred that a first diffusion region is provided adjacent to, and in fluid communication with, the first electrode, the core material being adapted to provide passage of fluid to the first diffusion region. A diffusion region assists in distributing the fluid across the electrode surface, promoting efficient reaction.

Further preferably, a second diffusion region is provided adjacent to, and in fluid communication with, the second electrode, the core material being adapted to provide passage of fluid to the second diffusion region.

The diffusion region(s) may comprise a layer of diffusion media, such as graphite paper. However, it is preferred that the first and/or second diffusion region is integral with the core material which, within the diffusion region, is adapted to distribute fluid over substantially the whole of the respective electrode. In this way, the number of components, and hence the complexity of assembly, can be reduced. Further, the diffusion region can be tuned to the particular application.

The particular material used for the core material(s) will depend on the specific application. In a particular embodiment, the cellular material is, conveniently, honeycomb having cells defined by fluid-impermeable cell walls, the at least some of the cells being interconnected by perforations in selected cell walls. Such a honeycomb could be fabricated from aluminium, for example.

Alternatively, the cellular material could advantageously be a foam comprising voids, at least some of the voids being joined to allow passage of fluid. The interconnections between voids could be formed naturally in the material, or could be introduced after formation of the material, e.g. by laser or machining. In a further example, the cellular structure is a 3-dimensional fabric having at least some of its cells defined by fluid-permeable walls. For example, the fabric could be made from polyester felt. Preferably, at least a portion of the cells in the 3-dimensional fabric are treated with resin to prevent the passage of fluid therethrough. Thus flow channels can be defined in the material as required by the particular application.

Further alternatively, the core material or at least one of the first and second core materials could advantageously comprise a 3-dimensional fabric incorporating fluid flow channels therein, such as an open-weave knit. In this case the material itself could be permeable or impermeable to fluid.

Depending on the application and selected materials, it may be advantageous to change the inherent fluid flow properties of the core material. Preferably therefore, the core material or at least one of the first and second core materials is provided with machined flow channels.

Where more than one core material is deployed in a structure, different materials and/or machining may be employed for each. For example, where a first fluid is to be carried by a first core material, and a different fluid by a second, it may be advantageous to choose the first and second core materials to suit the properties of the fluids they are to transport. Alternatively, the first and second core materials could each comprise the same material.

Preferably, the first and second electrodes each comprise a porous catalyst dispersed on a fluid-permeable film. This ensures a large surface area is available to catalyse the reaction and allows passage of the ions (usually protons) to the electrolytic membrane. Advantageously, a fluid diffusion layer disposed adjacent each electrode. This provides better dispersion of the fluid across the electrodes.

As described above, exhaust products such as water may be produced by the cell reaction. It is therefore preferable that the core material is further adapted to allow the passage of exhaust fluid away from at least one of the electrodes. This prevents the build-up of fluid at the fuel cell.

Preferably, a skin material is provided on the outside of the core material. This serves to seal and protect the core material and reinforces the composite structure. In some examples, the core material itself may provide the sealing function. The skin could be provided on one side of the structure, but is preferably provided on both. Advantageously, the skin is bonded to the core material.

In accordance with a second aspect of the present invention, a fuel cell array is provided which comprises a plurality of fuel cell assemblies according to the first aspect of the present invention, wherein the plurality of fuel cells are incorporated in one composite structure and the core material is adapted to enable passage of one or more fluids to each of the fuel cells. Thus several fuel cells may be incorporated in one composite structure. The core material can supply fluids to multiple fuel cells, working either in isolation or as a collective. Advantageously, the core material is adapted to enable passage of fluid to at least two of the fuel cells via a common path. This provides additional space savings and reduces the complexity of the various channels which would otherwise be required.

Preferably, the core material comprises a plurality of core materials, each separated from the next by an interface, and at least one fuel cell being disposed at each of the interfaces. Fuel cells disposed at adjacent interfaces need not be aligned with one another but may advantageously be laterally displaced along the interfaces. In a particular example, the core material comprises first, second and third core materials, each separated by an interface, at least one fuel cell being disposed at each of the interfaces. Conveniently, as described above with reference to the first aspect of the invention, a fluid-impermeable interlayer is disposed at each interface, the electrolytic membranes of each fuel cell being incorporated in the interlayers.

Methods of making a fuel cell assembly and a fuel cell array according to the first and second aspects of the invention are also provided.

In accordance with a third aspect of the invention, a method of making a fuel cell assembly comprises the steps of:
(A) providing a first core material which permits the passage of fluid therethrough;
(B) affixing a first side of a fuel cell, the fuel cell comprising an electrolytic membrane having first and second faces and first and second electrodes disposed adjacent to the respective faces of the electrolytic membrane, the first and second electrodes being connectable to an electric circuit, to the first core material at a position where fluid in the first core material can contact the first side of the fuel cell; and
(C) providing a second core material which permits the passage of fluid therethrough and affixing it to a second side of the fuel cell in a position where fluid in the second core material can contact the second side of the fuel cell,
such that the fuel cell is embedded within the resulting core material; and incorporating the assembly into a composite laminate structure, characterised in that at least one of the first and second core materials comprises a cellular material having cells defined by cell walls, at least some of the cells being interconnected to allow the passage of fluid between cells, through selected cell walls.

This technique provides support to the fragile fuel cell throughout the manufacturing process and results in the fuel cell being incorporated in a composite laminate structure.

Preferably, providing the first core material comprises the steps of:
(A1) providing a cellular material; and
(A2) interconnecting at least some of the cells in the material to create a fluid flow path. Thus the configuration of the flow path can be designed to suit the application.

Advantageously, affixing the fuel cell comprises the steps of:
(B1) providing a fluid-impermeable interlayer;
(B2) incorporating the electrolytic membrane into the interlayer;
(B3) applying the first and second electrodes to the first and second faces of the membrane;
(B4) applying current collectors to the first and second electrodes; and
(B5) affixing the interlayer and fuel cell to the first core material. In this way, the fuel cell can be manufactured with the interlayer, which provides protection and support for the fragile membrane and electrodes.

Preferably, providing the second core material comprises the steps of:
(C1) providing a cellular material; and
(C2) interconnecting at least some of the cells in the material to create a fluid flow path. The configuration of the second flow path can therefore be selected for the particular application.

Examples of fuel cell assemblies in accordance with the present will now be described with reference to the following drawings, in which:-
Figure 1 is a schematic diagram of a conventional fuel cell arrangement;
Figure 2 illustrates an example of a conventional composite structure, expanded for clarity;
Figure 3 depicts a first embodiment of a fuel cell assembly in accordance with the invention in cross section;
Figure 3a illustrates a portion of Figure 3 in more detail;
Figures 4a, 4b and 4c each illustrate flow channels in three core materials, in plan view and in cross section;
Figure 5 depicts a second embodiment of a fuel cell assembly in cross section;
Figure 6 shows a portion of a third embodiment of a fuel cell assembly in cross section;
Figures 7 depicts a fourth embodiment of a fuel cell assembly in cross section;
Figures 8a and 8b show, schematically, two fuel cell arrays;
Figure 9 depicts a fuel cell array in cross section;
Figures 10a, 10b and 10c illustrate an example of a fuel cell assembly in plan, perspective and cross sectional views;
Figure 11 a shows a fifth embodiment of a fuel cell assembly in cross section; and
Figure 11b shows a plan view of the fourth embodiment sectioned along the line X-X.

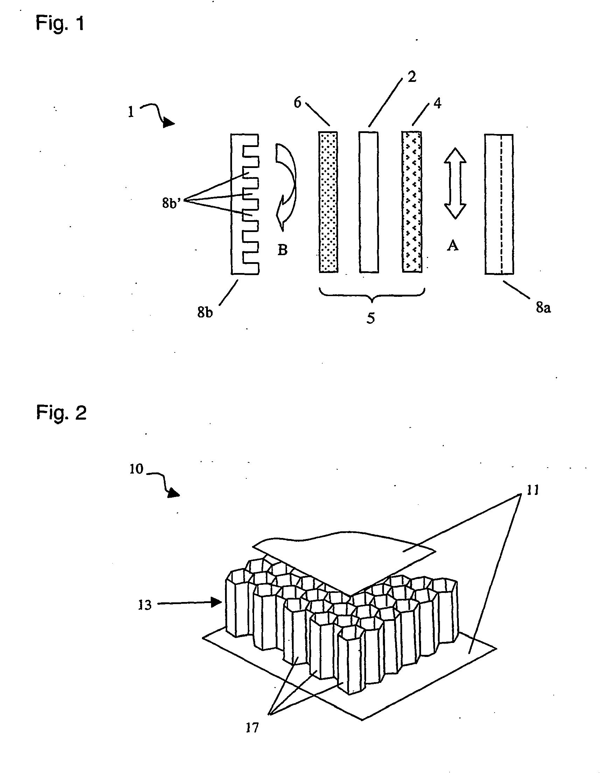

The functional components of a typical PEMFC 1 are shown schematically in Figure 1. A polymer membrane 2 is disposed between an anode 4 and a cathode 6. The membrane 2 comprises an electrolytic material which is capable of conducting ions yet is electrically insulating. A typical example is Nafion®, which is a good proton (H⁺) conductor. The electrodes 4, 6 generally comprise a platinum-based catalyst dispersed on a fluid-permeable backing such as carbon fibre paper. This provides a gas diffusion layer (not shown), which helps to disperse fluid evenly across the electrode. The membrane 2, anode 4 and cathode 6 are collectively referred to as the membrane electrode assembly (MEA) 5.

Conventionally, field flow plates 8a and 8b are provided adjacent each electrode. The plates 8a, 8b control the flow of fluid across each electrode 4, 6. A first fluid A, comprising a fuel such as hydrogen or methanol, is guided by plate 8a, to or across the anode 4. In Figure 1, fluid A is shown to flow in the plane of the diagram, and guide channels (not shown) are provided in the face of plate 8a for this purpose. A second fluid, comprising an oxidant such as oxygen or air, is guided by plate 8b to or across the cathode 6. Figure 1 shows fluid B flowing out of the plane of the paper, guided by channels 8b' on plate 8b.

The electrodes 4, 6 are connected to an electric circuit by means of current collectors (not shown). The fluids A and B react at their respective electrodes 4, 6 as described above, and an electric current is established.

Figure 2 depicts a typical composite laminate structure 10 having a honeycomb core 13 sandwiched between skins 11. The honeycomb core 13 is made up of an array of cells 17, each in the form of a hexagonal prism. Honeycomb cores provides high stiffness and low weight laminates. Since the available bonding area between the honeycomb 13 and skin 11 is small, high-performance resin systems such as epoxies are used to achieve the necessary adhesion to the laminate skins, resulting in an intimately bonded, unitary body. Honeycomb cores are available in a variety of materials including aluminium, thermoplastics, paper, resin formed honeycomb cells such as Nomex®, and fabrics.

Aluminium honeycombs are generally made using a multi-stage process. Thin sheets of the material are printed with alternating, parallel, thin stripes of adhesive and the sheets are then stacked in a heated press while the adhesive cures. The stack of sheets (known as 'block form') is then sliced through its thickness and the sheets are later gently stretched and expanded to form the sheet of continuous hexagonal cell shapes. Thermoplastic honeycombs are usually produced by extrusion followed by slicing to the required thickness.

Suitable skin materials include composite laminates or metal sheets such as aluminium, stainless steel or mild steel. The choice of skin material will depend on the particular application for which the structure is intended.

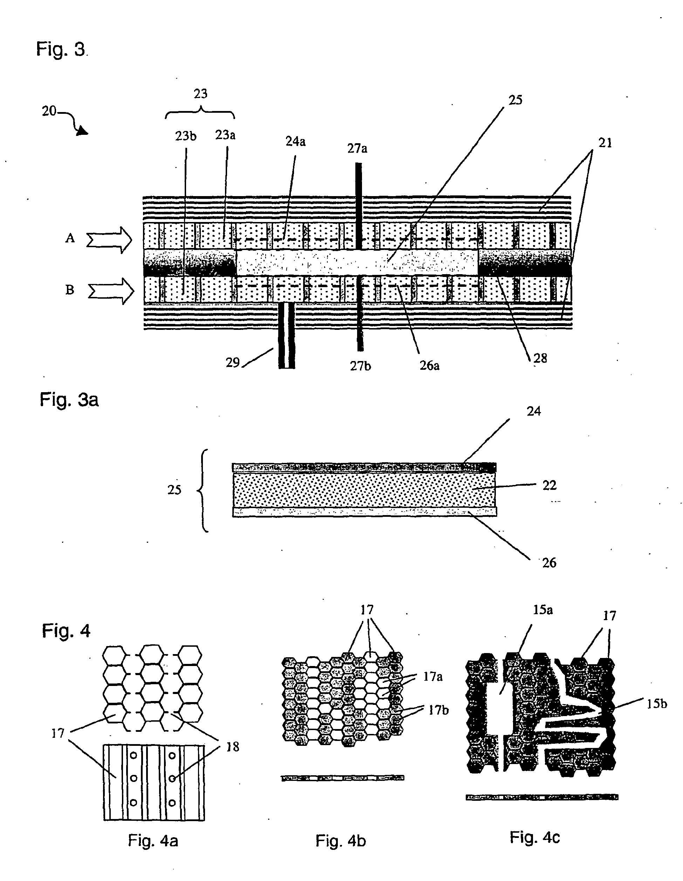

A first embodiment of a fuel cell assembly, in which the fuel cell is incorporated in a composite laminate structure, is shown in Figure 3. The core material provides a gas or liquid (i.e. fluid) transfer mechanism through which fluids can be supplied to the fuel cell.

In this example, two skin layers 21 sandwich a core 23 which is divided into first and second core materials 23a and 23b. A fluid-impermeable interlayer 28 is situated at the interface between the two core materials. The first and second core materials 23a and 23b are here depicted as made of honeycomb (cells 17 corresponding to those shown in Figure 2), which has been perforated to enable flow of fluid between certain cells. However, it should be appreciated that any suitable core material having the (inherent or otherwise) ability to transfer fluid through it and support the composite structure could be employed. Further, it will be appreciated that the skin layers 21 are optional. In some examples, the core material itself can act as the skin, or alternatively the core material could be positioned against another body that provides support. In other cases, the outer skin 21 may be multifunctional, providing a seal to prevent gas or liquid from escaping or indeed an exchange mechanism enabling the removal of waste product, such as water or heat from electronics, and the entry of gas or liquids, e.g. oxidant gas required by the fuel cell.

A membrane electrode assembly (MEA) 25 is disposed at the interface between the two core materials 23a and 23b in a region to which the interlayer 28 does not extend, in this case an aperture in the interlayer 28. The interlayer 28 is considered part of the core 23 and as such, the MEA 25 is said to be embedded in the core 23. In this context, "embedded" means that the MEA is set into the core 23, as demonstrated by the examples described herein. Thus, the MEA is generally entirely surrounded by the core (i.e. that part of the structure between the skins 21), although the core may comprise two or more components. The MEA 25 comprises an electrolytic membrane 22, an anode 24 and a cathode 26 as shown in Figure 3a. The construction of each of these components is similar to that described above with respect to Figure 1. Current collectors 27a and 27b connect the anode 24 and cathode 26, respectively, to an electric circuit (not shown). In practice, it is convenient to provide current collectors 27a and 27b as wiring or conductive tracks on the interlayer 28, rather than pass them immediately through the core and skin materials as shown. However, if components which are to be powered by the fuel cell are disposed on or near the outside of the structure (for instance, on skin 21), it may be preferable to lead the current collector out directly, as shown, to reduce the amount of wiring required.

It will be appreciated that any known type of fuel cell, for example PEMFCs, DMFCs or SOFCs, may be incorporated into a composite structure in this way.

A first fluid A, usually a fuel such as hydrogen, is arranged to pass through the first core material 23a to arrive at the anode 24. This may be achieved, for example, by pumping the fluid through the material or applying pressure to the fluid source. Pressurised cylinders or containers can be used to store the fuel and/or reactant fluids (for example, hydrogen and oxygen respectively) remotely from the core material wherein pressure is controlled by a governor and the fluids are fed to the core material via inserts. Alternatively, the fuel fluid may be stored in this manner and an oxidant, air for example, obtained directly from the surrounding atmosphere. Further, the core material itself may form a storage structure such as a well for one or more of the fluids, which are maintained under pressure via the governor of an external fluid storage container, thus providing a better-regulated supply of fluid to the MEA (as opposed to directly connecting the external fuel fluid storage container to the channels supplying the MEA). There may be occasions where localised fluid storage is considered so that a MEA can be supplied with a discrete supply of fuel and/or reactant fluid. In this case, the fluid(s) could be stored within the composite structure itself and released to the MEA when needed, with no need for an external storage container. Any combination of these techniques could be employed to suit the application.

In the case of a honeycomb core, the fluid passes from one cell to the next by means of perforations in the cell walls. This and alternative core structures are discussed in more detail below.

Similarly, a second fluid B, usually an oxidant or other such reactant such as a reducing agent, is transported through the second core material 23b to the cathode 26. Transport of the second fluid B may be effected using the same technique as for fluid A, or alternative means may be preferred. This may especially be the case where one fluid is a gas and the other a liquid.

The fluids A and B react at their respective electrodes, as described above with reference to Figure 1, and an electric current is established in the circuit to which current collectors 27a, 27b are connected. The current collectors 27a, 27b may be provided in the form of mesh, wire or conductive tracks, either fixed, bonded or sprayed onto the interlayer 28. Complex patterns of conductive, semi-conductive or insulating tracks can be applied in two or three dimensions allowing multiple tasks to be performed.

A drain 29 may be provided to allow reaction products, such as water, to exit the structure. Depending on the core material selected, it may be necessary to provide a flow channel in the material to direct the water from the cathode 26 to the drain 29.

The core material(s) 23 may be honeycomb, foam, open knitted weave or any equivalent 3-D fabric that provides the necessary mechanical performance requirements demanded by the end-use application of the composite structure, and provides a fluid transfer mechanism via which gases and/or liquids may be delivered to the embedded fuel cell.

To enable gas or liquid transfer through a honeycomb, the material is perforated during manufacture to provide fluid communication between selected cells 17. As a result, the structural rigidity of the core is maintained, yet a flow path is established. Diagrammatic representations of a perforated honeycomb core are provided in Figure 4a. It should be noted that, whilst the perforations 18 are depicted as circular, they could be in the form of slots, holes or any other cut-out which permits fluid flow between cells.

In order to produce a perforated aluminium honeycomb, the block form honeycomb is sliced and subjected to mechanical or power beam (e.g. laser) drilling at the nodal points, that is the bonded areas of the thin sheets, and subsequently stretched and expanded resulting in a perforated honeycomb. Thermoplastic honeycombs are typically perforated after extrusion. It is also possible to use paper or card honeycomb core material, such as Nomex®, wherein flow channels are provided either by making the honeycomb from perforated paper in the first instance or post machining the final core product.

Open knitted weave or other 3-D fabrics provide flow channels for gases or liquids through their unique structure. In some cases, such 3-D fabrics are impregnated with resin to give the core material strength, and in such cases flow channels will need to be formed. Such an example would be a 3-D fabric of (fluid permeable) polyester felt that has a honeycomb structure on which a thin layer of resin film is placed. When heated, the resin flows and impregnates the cells 17. In order to provide flow channels, the resin film may only be placed on the fabrics in discrete locations thus on heating only designated cells 17a are impregnated with resin, as illustrated in Figure 4b, leaving cells 17b free to transport fluid. Alternatively, the cured core can be machined to provide a series of flow paths 15a, 15b as required, as shown in Figure 4c.

By appropriate selection of core material and flow channel configuration, transfer of the fluid(s) to the fuel cell can be optimised. The design of the channels can provide for flooding of the fuel cell anode or cathode with the required fuel or oxidant fluid and are engineered to suit the flow patterns that enable optimal gas or liquid transfer to the fuel cell.

In some embodiments, diffusion regions 24A and 26A are provided adjacent to each electrode. These regions assist in the distribution of fluid across the surface of the respective electrode. The diffusion regions may comprise a layer of diffusion media such as graphite paper or similar porous material, arranged adjacent to the electrode surface. However, the need for such material can be done away with by forming the regions 24A and 26A integrally with the core material, for example by arranging the flow channels to distribute fluid evenly across the electrode. The core material delivers fluid to the electrodes 24, 26 via the respective diffusion region.

Further, the flow channels can be used to enable different gases or liquids to flow simultaneously within the same core material, as exemplified for the honeycomb structures shown in Figure 4.

It should be noted that the term "flow channel" is used herein to describe both flow paths which occur as a result of a material's inherent properties (e.g. the interconnecting pores of an open cell foam) and those introduced by a dedicated machining step (e.g. perforations in a honeycomb or machined channels).

As mentioned above, whilst the flow patterns can be used to provide fuel and oxidant gases or liquids to the fuel cell, they can also be used to remove unneeded heat or fluids from the structure. For example, the core material 23 can provide a fluid flow path to enable the removal of water from the fuel cell. In areas local to electronic components, the core can include flow paths for coolant fluids which provide cooling for such electronics or indeed the structure itself. The core material also provides the opportunity to contain or store gases or liquids until required.

The interlayer 28 may be rigid or flexible depending on the end-use application requirements. This interlayer 28 is sheathed, either partially or wholly but at least in the vicinity of the MEA 25, on one or both sides, by a core material 23 that enables fluid supply to the MEA 25.

The interlayer 28 may be made from a variety of materials such as a thermoplastic (e.g. polyethylene), a composite laminate, an impregnated fabric, a thermoset, or indeed a reinforced structural resin system such as an epoxy. The MEA 25 can be incorporated into the interlayer 28 by bonding (e.g. by way of adhesives) or welding (e.g. through use of laser). The MEA 25 may be layered-up, in the process of curing the laminates in either a heated press or oven but can also be cold cured either together or separate. The MEA 25, incorporated in the interlayer, may be joined in turn to the first and second core materials 23a, 23b or to both at the same time. Adequate bonding of the core material to the interlayer is required to maintain the integrity of the flow channels.

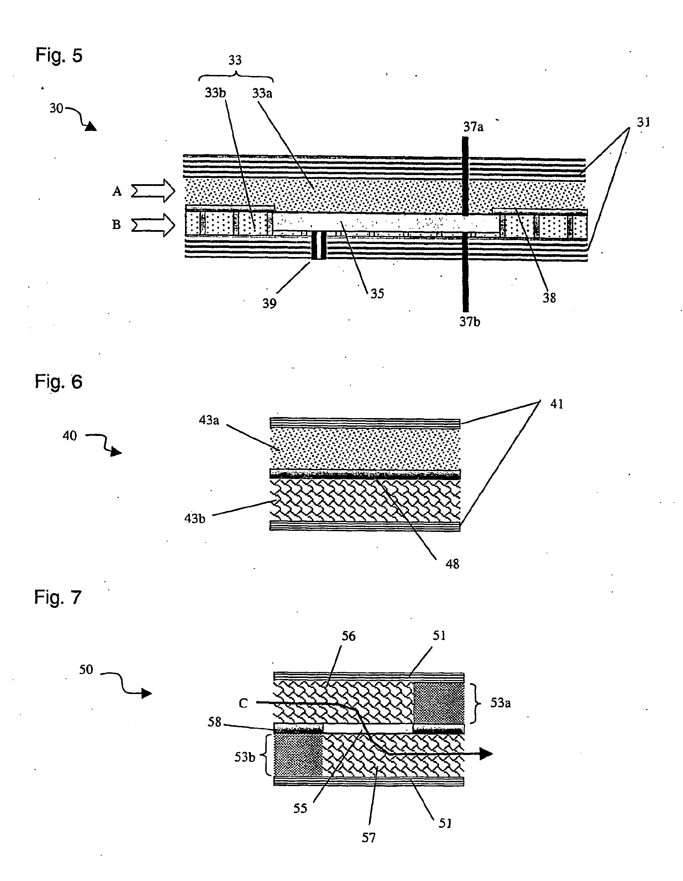

It will be evident that the first and second core materials need not be of the same type. For example, Figure 5 illustrates a second embodiment of a fuel cell assembly 30 in which the first core material 33a is an open cell foam and the second core material 33b is a perforated honeycomb core. Figure 6 shows a third embodiment 40 in which the first core material 43a is an open cell foam and the second core material 43b is a 3D fabric. The two core materials 43a and 43b are separated by an interlayer 48 in which a fuel cell (not shown) is incorporated. Of course any combinations of core, including the same type, can be utilised depending on the flow requirements.

It will be noted that the arrangement of the MEA 35 in the fuel cell assembly 30 shown in Figure 5 is different to that of the first embodiment. Here, the MEA 35 is still provided at the interface between the two core materials 30a and 30b, but is embedded in the second core material 33b rather than incorporated in the interlayer 38. However, the anode 34 and cathode 36 are still in contact with the first and second core materials 33a and 33b respectively. Further, in some variants it may not be necessary to provide an interlayer 38 at all. For instance, the flow paths in the core materials 33a, 33b may be designed to prevent fluids crossing the interface between the materials. An example of this would be a 3-D fabric having resin-filled cells separating its flow channels from the other core material. Equally, a single core material 33 could be provided with the fuel cell embedded inside and a region of resin-filled cells (or other such obstacle) separating one flow path from the other.

As in the first embodiment, current collectors 37a, 37b may be provided to connect the electrodes 34, 36 to an electric circuit, and a drain 39 may be included.

Figure 7 depicts a fourth embodiment which is particularly suited for use with a fuel cell of the type in which a mixture of fuel and oxidant fluids is transported to one of the electrodes and passes through the electrolytic membrane, which is fluid-permeable, to access the second electrode. In such cases, each electrode is designed to be selectively responsive to either the fuel or the oxidant fluid.

Thus, only one fluid C (which is a mixture of fluids A and B, referred to above) need be transported to the MEA 55. Since the electrodes are selective, the mixture C can arrive at either or both electrodes and the reaction will still be able to take place. In a simplified example, therefore, the MEA could be embedded inside a single core material such as an open cell foam which allows fluid access to, and away from, both electrodes. In the preferred example of Figure 7, however, the core is arranged to provide an inlet path 56 and an outlet path 57. This is achieved by means of a first core material 53a and a second core material 53b separated by an interlayer 58. The MEA 55 is disposed in the interlayer 58 in much the same way as described above with respect to the first embodiment. Each core material 53a, 53b is formed, at least in part, from a 3D fabric which allows fluid flow through its structure. The input and output paths 56, 57 are formed by sealing off one end of each core. This could be achieved by means of resin or, for example, by a block of fluid-impermeable material. As described above with reference to the second embodiment, the interlayer 58 is optional.

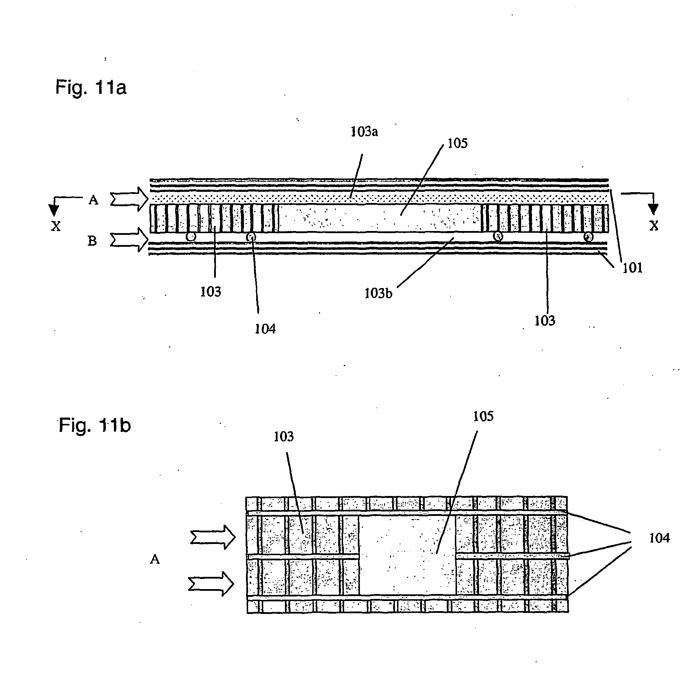

Figures 11 a and 11 b show a fifth embodiment in which the core material transports the fluids A and B to the fuel cell 105 between a honeycomb layer 103 and skin layers 101. The flow channels 103a and 103b could comprise the adhesive layer used to attach honeycomb 103 to the skins 101, or a mesh or array of tubes could be incorporated. In the example shown, strips 104 of adhesive are used to bond the laminate structure together and also define the flow paths 103a, b. The fluid flow paths 103a, b can be considered to constitute core materials in themselves since they are between the outer skins and are an integral part of the composite laminate structure.

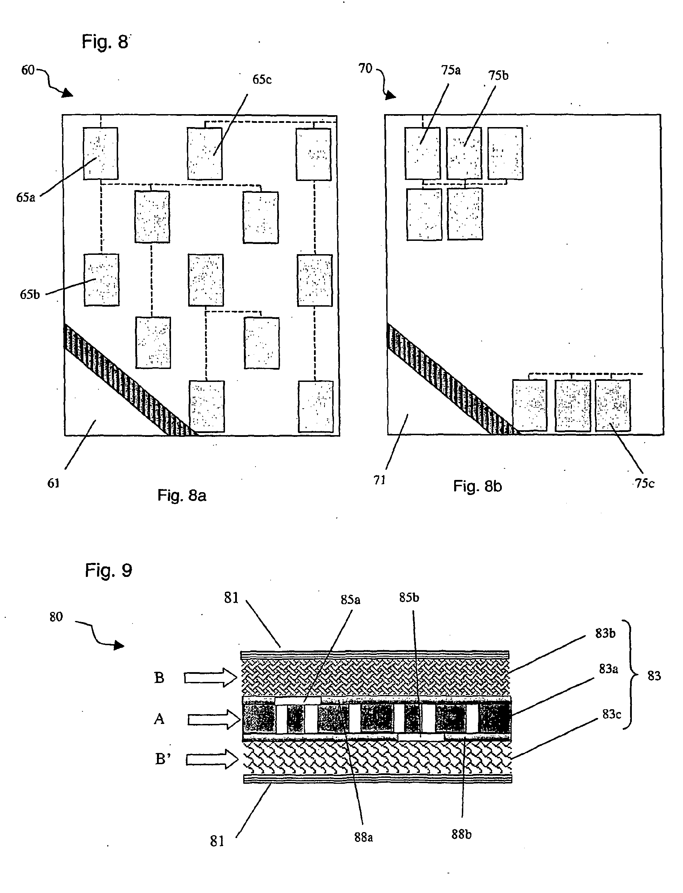

The fuel cell assemblies described herein allow for the positioning of multiple fuel cells within a composite structure (a fuel cell array) to marry with local power requirements or other needs such as weight balance within the structure. As depicted in Figure 8a, the fuel cells 65a, 65b, 65c etc may occupy a geometrical pattern providing uniform weight distribution within the composite 61. Alternatively, as shown in Figure 8b, the fuel cells 75a, 75b, 75c etc may be clustered to provide power to electronic components, especially those that are critical to the functionality of the composite product.

In further examples, multiple fuel cells may be provided within one composite structure in different layers. For example, two or more embedded interlayers may be provided within the composite structure. An example of this is shown in Figure 9, in which fuel cell assembly 80 comprises first second and third core materials 83a, 83b and 83c sandwiched between skins 81. An interlayer 88a, 88b is provided at the interface between each pair of adjacent cores. An MEA 85a, 85b is disposed in each interlayer 88a, 88b. As shown in Figure 9, the MEAs need not be aligned with one another but could be laterally displaced. There may also be more than one MEA incorporated in each interlayer 88.

A first fluid A, typically a fuel, is arranged to flow through the inner core material 83a. The anode of each respective MEA 85a, 85b is arranged to face this inner core material 83a so as to receive fluid A. Second and third fluids B and B', both typically an oxidant, are passed through outer core materials 83b, 83c to the cathode of each MEA 85a, 85b. Of course, the oxidant could be arranged to flow through the inner core material 83a and the fuel be carried by outer core materials 83b and 83c, in which case the orientation of the MEAs 85a, 85b would be reversed.

It will be appreciated that any number of core materials, and interlayers if required, could be "stacked" in this way.

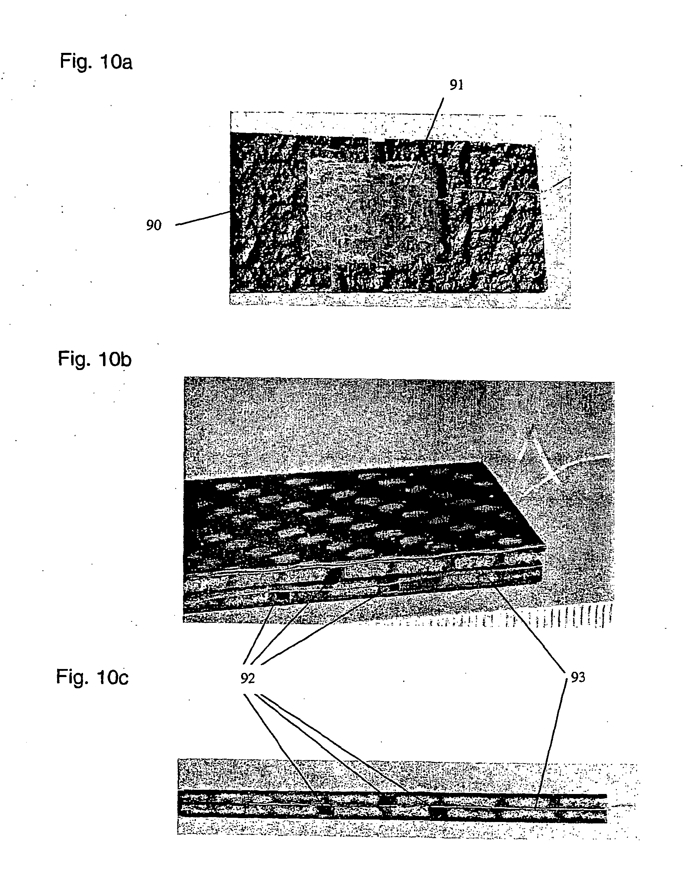

An example of a fuel cell assembly is shown in Figures 10a, 10b and 10c. A polyester felt with a honeycomb structure that had a thin layer of resin applied to it was heated to produce a core material 90. A reinforcement (skin) was adhered to one face. The resultant material 90 was machined on the resin side to provide a series of flow paths 91, 92. An interlayer 93 incorporating an embedded fuel cell was made up from a thermoset. A two-part epoxy was placed on the interlayer, around the perimeter of the MEA, and the interlayer was positioned and bonded to the upper and lower core materials. The resultant composite structure is shown in Figure 10c.

The fuel cell assembly finds use in numerous applications. In many cases, a panel incorporating the fuel cell (as described) will be constructed and this unit can then be built into a product as desired. The current collectors can be connected to a load circuit forming part of the product and the power generated by the fuel cell used to operate the product.

In other examples, the fuel cell may be embedded in an integral part of the final product. For example, unmanned air vehicles (UAVs) are unmanned powered aerial vehicles that utilise aerodynamic forces to provide vehicle lift. Modem UAVs use state-of-the-art materials, such as composites, to form the outer structure. Most are battery operated and are used in surveillance for monitoring crops, electricity cables and gas lines. The presently disclosed fuel cell assembly offers the opportunity to incorporate the vehicle's power supply into the structure of the vehicle itself, thereby utilizing the "passive" structure part and offering it a secondary function, that of a fluid flow mechanism to the embedded fuel cell. Thereby a back-up power supply can be incorporated into the vehicle (in addition to a battery) or indeed the fuel cell may provide the primary supply power to the vehicle, leaving space for additional payload since the battery or conventional fuel cell stack is no longer required.

Any product, incorporating a composite laminate structure, can benefit from the disclosed technique as the power requirements of the products can be built into the structural body thus utilizing the space that already exists in the structure.

## Claims

1. A fuel cell assembly comprising a fuel cell incorporated in a composite laminate structure, the composite laminate structure comprising a core material within which the fuel cell is embedded, the fuel cell comprising an electrolytic membrane having first and second faces, and first and second electrodes disposed adjacent to the respective faces of the electrolytic membrane, the first and second electrodes being connectable to an electric circuit, wherein the core material provides support to the fuel cell embedded therein and fluid communication through the core material, to enable the passage of one or more fluids to the first and second electrodes, **characterised in that** the core material comprises a cellular material having cells defined by cell walls, at least some of the cells being interconnected to allow the passage of fluid between cells, through selected cell walls.

2. A fuel cell assembly according to claim 1 wherein the core material is adapted to enable the passage of a first fluid to the first electrode and a second fluid to the second electrode, whilst maintaining separation between the first and second fluids.

3. A fuel cell assembly according to any of the preceding claims wherein the core material comprises first and second core materials, defining an interface therebetween, the first and second core materials being separated along at least a portion of the interface by an interlayer which is substantially impermeable to fluid.

4. A fuel cell assembly according to claim 3 wherein the electrolytic membrane is disposed at the interface between the first and second core materials, at least a portion of the membrane being located in a region of the interface to which the interlayer does not extend, such that the first face of the electrolytic membrane abuts the first core material and the second face abuts the second core material.

5. A fuel cell assembly according to claim 4 wherein the electrolytic membrane is incorporated in the interlayer.

6. A fuel cell assembly according to claim 1 wherein the electrolytic membrane is permeable to fluid, allowing fluid arriving at the membrane at its first face to cross to its second face and vice versa.

7. A fuel cell assembly according to claim 6 wherein the core material is adapted to enable the passage of fluid to the second electrode via the electrolytic membrane.

8. A fuel cell assembly according to claim 6 or 7 wherein the fluid comprises a mixture of first and second fluids.

9. A fuel cell assembly according to at least claim 2 or claim 8 wherein the first electrode is selectively responsive to the first fluid and the second electrode is selectively responsive to the second fluid.

10. A fuel cell assembly according to any of the preceding claims wherein a first diffusion region is provided adjacent to, and in fluid communication with, the first electrode, the core material being adapted to provide passage of fluid to the first diffusion region, preferably the first diffusion region being integral with the core material which, within the diffusion region, is adapted to distribute fluid over substantially the whole of the respective electrode.

11. A fuel cell assembly according to any of the preceding claims wherein the cellular material is honeycomb having cells defined by fluid-impermeable cell walls, the at least some of the cells being interconnected by perforations in selected cell walls.

12. A fuel cell assembly according to any of the preceding claims wherein the cellular material is a foam comprising voids, at least some of the voids being joined to allow passage of fluid.

13. A fuel cell assembly according to any of the preceding claims wherein the cellular structure is a 3-dimensional fabric having at least some of its cells defined by fluid-permeable walls, preferably at least a portion of the cells in the 3-dimensional fabric being treated with resin to prevent the passage of fluid therethrough.

14. A fuel cell assembly according to any of the preceding claims wherein the core material or at least one of the first and second core materials is provided with machined flow channels.

15. A fuel cell array comprising a plurality of fuel cell assemblies according to any of claims 1 to 14 wherein the plurality of fuel cells are incorporated in one composite laminate structure and the core material is adapted to enable passage of one or more fluids to each of the fuel cells.

16. A composite structure comprising a fuel cell assembly according to any of claims 1 to 14 or a fuel cell array according to claim 15.

17. A method of making a fuel cell assembly comprising the steps of:
(A) providing a first core material which permits the passage of fluid therethrough;
(B) affixing a first side of a fuel cell, the fuel cell comprising an electrolytic membrane having first and second faces and first and second electrodes disposed adjacent to the respective faces of the electrolytic membrane, the first and second electrodes being connectable to an electric circuit, to the first core material at a position where fluid in the first core material can contact the first side of the fuel cell; and
(C) providing a second core material which permits the passage of fluid therethrough and affixing it to a second side of the fuel cell in a position where fluid in the second core material can contact the second side of the fuel cell,
such that the fuel cell is embedded within the resulting core material; and incorporating the assembly into a composite laminate structure, **characterised in that** at least one of the first and second core materials comprises a cellular material having cells defined by cell walls, at least some of the cells being interconnected to allow the passage of fluid between cells, through selected cell walls.

## Patentansprüche

1. Eine Brennstoffzellen-Baugruppe, die eine Brennstoffzelle aufweist, die in eine Verbund-Laminat-Struktur eingebunden ist, wobei die Verbund-Laminat-Struktur ein Kernmaterial aufweist, in dem die Brennstoffzelle eingebettet ist, wobei die Brennstoffzelle eine elektrolytische Membrane mit ersten und zweiten Seiten und erste und zweite Elektroden aufweist, die benachbart den jeweiligen Flächen der elektrolytischen Membrane angeordnet sind, wobei die ersten und zweiten Elektroden mit einer elektrischen Schaltung verbindbar sind, worin das Kernmaterial Unterstützung für die darin eingebettete Brennstoffzelle und Fluidkommunikation durch das Kernmaterial zur Verfügung stellt, um den Durchgang von einem oder mehreren Fluiden zu den ersten und zweiten Elektroden zu ermöglichen, **dadurch gekennzeichnet, dass** das Kernmaterial ein zellförmiges Material aufweist mit Zellen, die durch Zellwände gebildet sind, wobei zumindest einige der Zellen miteinander verbunden sind, um den Durchgang von Fluid zwischen Zellen durch ausgewählte Zellwände zu erlauben.

2. Eine Brennstoffzellen-Baugruppe nach Anspruch 1, worin das Kernmaterial geeignet ist, den Durchgang eines ersten Fluids zu der ersten Elektrode und eines zweiten Fluids zu der zweiten Elektrode zu ermöglichen, während es eine Trennung zwischen den ersten und zweiten Fluiden aufrecht erhält.

3. Eine Brennstoffzellen-Baugruppe nach irgendeinem der vorhergehenden Ansprüche, worin das Kernmaterial erste und zweite Kernmaterialien aufweist, die eine Grenzschicht zwischen sich bilden, wobei die ersten und zweiten Kernmaterialien voneinander getrennt sind entlang zumindest eines Teils der Grenzschicht durch eine Zwischenschicht, die im Wesentlichen impermeabel für Fluid ist.

4. Eine Brennstoffzellen-Baugruppe nach Anspruch 3, worin die elektrolytische Membran an der Grenzschicht zwischen den ersten und zweiten Kernmaterialien angeordnet ist, wobei zumindest ein Teil der Membran in einem Bereich der Grenzschicht angeordnet ist, zu dem sich die Zwischenschicht nicht erstreckt, so dass die erste Seite der elektrolytischen Membran an das erste Kernmaterial angrenzt und die zweite Seite an das zweite Kernmaterial angrenzt.

5. Eine Brennstoffzellen-Baugruppe nach Anspruch 4, worin die elektrolytische Membran eingebunden ist in die Zwischenschicht.

6. Eine Brennstoffzellen-Baugruppe nach Anspruch 1, worin die elektrolytische Membran permeabel für Fluid ist und erlaubt, dass Fluid, das an der Membran an ihrer ersten Seite ankommt, sie zu ihrer zweiten Seite durchquert und umgekehrt.

7. Eine Brennstoffzellen-Baugruppe nach Anspruch 6, worin das Kernmaterial geeignet ist, den Durchgang von Fluid zu der zweiten Elektrode über die elektrolytische Membran zu ermöglichen.

8. Eine Brennstoffzellen-Baugruppe nach Anspruch 6 oder 7, worin das Fluid eine Mischung von ersten und zweiten Fluiden aufweist.

9. Eine Brennstoffzellen-Baugruppe nach zumindest Anspruch 2 oder Anspruch 8, worin die erste Elektrode selektiv auf das erste Fluid reagiert und die zweite Elektrode selektiv auf das zweite Fluid reagiert.

10. Eine Brennstoffzellen-Baugruppe nach irgendeinem der vorhergehenden Ansprüche, worin ein erster Diffusionsbereich vorgesehen ist benachbart zu und in Fluidverbindung mit der ersten Elektrode, wobei das Kernmaterial geeignet ist, einen Durchgang von Fluid zum ersten Diffusionsbereich zur Verfügung zu stellen, wobei der erste Diffusionsbereich vorzugsweise eingebaut ist in das Kernmaterial, das innerhalb des Diffusionsbereichs geeignet ist, Fluid über im Wesentlichen die gesamte jeweilige Elektrode zu verteilen.

11. Eine Brennstoffzellen-Baugruppe nach irgendeinem der vorhergehenden Ansprüche, worin das zellförmige Material eine Wabenstruktur ist mit Zellen, die durch Fluid-impermeable Zellenwände gebildet sind, wobei zumindest einige der Zellen miteinander verbunden sind durch Perforationen in ausgewählten Zellwänden.

12. Eine Brennstoffzellen-Baugruppe nach irgendeinem der vorhergehenden Ansprüche, worin das zellförmige Material ein Schaum ist, der Hohlräume aufweist, wobei zumindest einige der Hohlräume verbunden sind, um den Durchgang von Fluid zu erlauben.

13. Eine Brennstoffzellen-Baugruppe nach irgendeinem der vorhergehenden Ansprüche, worin die zellförmige Struktur ein dreidimensionaler Stoff ist, der zumindest einige seiner Zellen durch Fluid-permeable Wände gebildet hat, wobei vorzugsweise zumindest ein Teil der Zellen in dem dreidimensionalen Stoff behandelt worden ist mit Harz, um **dadurch** den Durchgang von Fluid zu verhindern.

14. Eine Brennstoffzellen-Baugruppe nach irgendeinem der vorhergehenden Ansprüche, worin das Kernmaterial oder zumindest eines der ersten und zweiten Kernmaterialien versehen ist mit bearbeiteten Strömungskanälen.

15. Eine Brennstoffzellen-Anordnung, die eine Vielzahl von Brennstoffzellen-Baugruppen nach irgendeinem der Ansprüche 1 bis 14 aufweist, worin die Vielzahl von Brennstoffzellen eingebunden ist in eine Verbund-Laminat-Struktur und das Kernmaterial geeignet ist, den Durchgang von einem oder mehreren Fluiden zu jeder der Brennstoffzellen zu ermöglichen.

16. Eine Verbund-Struktur, die eine Brennstoffzellen-Baugruppe nach irgendeinem der Ansprüche 1 bis 14 oder eine Brennstoffzellen-Anordnung nach Anspruch 15 aufweist.

17. Ein Verfahren zum Herstellen einer Brennstoffzellen-Baugruppe, das die Schritte aufweist:
(A) Vorsehen eines ersten Kernmaterials, das den Durchgang von Fluid durch sich erlaubt;
(B) Befestigen einer ersten Seite einer Brennstoffzelle, wobei die Brennstoffzelle eine elektrolytische Membran mit ersten und zweiten Seiten und erste und zweite Elektroden aufweist, die benachbart den jeweiligen Seiten der elektrolytischen Membran angeordnet sind, wobei die ersten und zweiten Elektroden verbindbar sind mit einer elektrischen Schaltung, an dem ersten Kernmaterial an einer Position, worin Fluid in dem ersten Kernmaterial die erste Seite der Brennstoffzelle kontaktieren kann; und
(C) Vorsehen eines zweiten Kernmaterials, das den Durchgang von Fluid durch sich erlaubt und Befestigen von ihm an einer zweiten Seite der Brennstoffzelle an einer Position, wo Fluid in dem zweiten Kernmaterial die zweite Seite der Brennstoffzelle kontaktieren kann, so dass die Brennstoffzelle eingebettet ist innerhalb des resultierenden Kernmaterials; und Einbinden der Baugruppe in eine Verbund-Laminat-Struktur, **dadurch gekennzeichnet, dass** zumindest eines der ersten und zweiten Kernmaterialien ein zellförmiges Material aufweist mit Zellen, die durch Zellwände gebildet sind, wobei zumindest einige der Zellen miteinander verbunden sind, um den Durchgang von Fluid zwischen Zellen durch ausgewählte Zellwände zu erlauben.

## Revendications

1. Unité de pile à combustible comprenant une pile à combustible incorporée dans une structure stratifiée composite, la structure stratifiée composite comprenant un matériau de coeur dans lequel la pile à combustible est encastrée, la pile à combustible comprenant une membrane électrolytique possédant des première et seconde faces, et des première et seconde électrodes disposées de manière adjacente par rapport aux faces respectives de la membrane électrolytique, les première et seconde électrodes pouvant être connectées à un circuit électrique, dans lequel le matériau de coeur fournit un support pour la pile à combustible qui y est encastrée et une communication fluidique à travers le matériau de coeur, afin de permettre le passage d'un ou plusieurs fluides vers les première et seconde électrodes, **caractérisée en ce que** le matériau de coeur comprend un matériau cellulaire possédant des cellules définies par des parois de cellule, au moins certaines des cellules étant interconnectées pour permettre le passage de fluide entre les cellules, à travers des parois de cellules sélectionnées.

2. Unité de pile à combustible selon la revendication 1, dans laquelle le matériau de coeur est adapté pour permettre le passage d'un premier fluide vers la première électrode et d'un second fluide vers la seconde électrode, tout en maintenant une séparation entre les premier et second fluides.

3. Unité de pile à combustible selon l'une quelconque des revendications précédentes, dans laquelle le matériau de coeur comprend des premier et second matériaux de coeur, définissant une interface entre eux, les premier et second matériaux de coeur étant séparés le long d'au moins une partie de l'interface par une couche intermédiaire qui est sensiblement imperméable au fluide.

4. Unité de pile à combustible selon la revendication 3, dans laquelle la membrane électrolytique est disposée à l'interface entre les premier et second matériaux de coeur, au moins une partie de la membrane étant située dans une région de l'interface sur laquelle la couche intermédiaire ne s'étend pas, de sorte que la première face de la membrane électrolytique vient buter contre le premier matériau de coeur et la seconde face vient buter contre le second matériau de coeur.

5. Unité de pile à combustible selon la revendication 4, dans laquelle la membrane électrolytique est incorporée dans la couche intermédiaire.

6. Unité de pile à combustible selon la revendication 1, dans laquelle la membrane électrolytique est perméable au fluide, permettant au fluide arrivant à la membrane au niveau de sa première face de la traverser vers sa seconde face et vice-versa.

7. Unité de pile à combustible selon la revendication 6, dans laquelle le matériau de coeur est adapté pour permettre le passage de fluide vers la seconde électrode via la membrane électrolytique.

8. Unité de pile à combustible selon la revendication 6 ou 7, dans laquelle le fluide comprend un mélange de premier et second fluides.

9. Unité de pile à combustible selon au moins la revendication 2 ou la revendication 8, dans laquelle la première électrode est réactive de manière sélective au premier fluide et la seconde électrode est réactive de manière sélective au second fluide.

10. Unité de pile à combustible selon l'une quelconque des revendications précédentes, dans laquelle une première région de diffusion est placée de manière adjacente à, et en communication de fluide avec, la première électrode, le matériau de coeur étant adapté pour fournir un passage de fluide vers la première région de diffusion, la première région de diffusion étant de préférence d'un seul tenant avec le matériau de coeur qui, à l'intérieur de la région de diffusion, est adapté pour distribuer le fluide quasiment sur la totalité de l'électrode respective.

11. Unité de pile à combustible selon l'une quelconque des revendications précédentes, dans laquelle le matériau cellulaire est en nid d'abeilles comprenant des cellules définies par des parois de cellule imperméables au fluide, les au moins quelques-unes des cellules étant interconnectées par des perforations dans des parois de cellule sélectionnées.

12. Unité de pile à combustible selon l'une quelconque des revendications précédentes, dans laquelle le matériau cellulaire est une mousse comprenant des vides, au moins quelques-uns des vides étant reliés pour permettre le passage de fluide.

13. Unité de pile à combustible selon l'une quelconque des revendications précédentes, dans laquelle la structure cellulaire est un tissu tridimensionnel dont au moins certaines des cellules sont définies par des parois perméables au fluide, de préférence au moins une partie des cellules dans le tissu tridimensionnel étant traitée avec une résine pour empêcher le passage de fluide au travers.

14. Unité de pile à combustible selon l'une quelconque des revendications précédentes, dans laquelle le matériau de coeur ou au moins l'un des premier et second matériaux de coeur est pourvu de canaux d'écoulement usinés.

15. Réseau de piles à combustible comprenant une pluralité d'unités de pile à combustible selon l'une quelconque des revendications 1 à 14, dans lequel la pluralité de piles à combustible est incorporée dans une structure stratifiée composite et le matériau de coeur est adapté pour permettre le passage d'un ou plusieurs fluides vers chacune des piles à combustible.

16. Structure composite comprenant une unité de pile à combustible selon l'une quelconque des revendications 1 à 14 ou un réseau de piles à combustible selon la revendication 15.

17. Procédé de fabrication d'une unité de pile à combustible comprenant les étapes consistant à :
(A) fournir un premier matériau de coeur qui permet le passage de fluide au travers ;
(B) attacher un premier côté d'une pile à combustible, la pile à combustible comprenant une membrane électrolytique possédant des première et seconde faces et des première et seconde électrodes disposées de manière adjacente par rapport aux faces respectives de la membrane électrolytique, les première et seconde électrodes pouvant être connectées à un circuit électrique, à un premier matériau de coeur en une position où le fluide dans le premier matériau de coeur peut venir au contact du premier côté de la pile à combustible ; et
(C) fournir un second matériau de coeur qui permet le passage de fluide au travers et l'attacher au second côté de la pile à combustible dans une position où le fluide dans le second matériau de coeur peut venir au contact du second côté de la pile à combustible,
de sorte que la pile à combustible est encastrée à l'intérieur du matériau de coeur résultant ; et incorporer l'unité dans une structure stratifiée composite, **caractérisé en ce qu'**au moins l'un des premier et second matériaux de coeur comprend un matériau cellulaire possédant des cellules définies par des parois de cellule, au moins certaines des cellules étant interconnectées pour permettre le passage de fluide entre les cellules, au travers de parois de cellule sélectionnées.
